# EUROPEAN PATENT APPLICATION

(11) **EP 2 990 359 A1**
(43) Date of publication of application: **02.03.2016**
(21) Application number: 15183386.0
(22) Date of filing: 01.09.2015
(51) Int. Cl.: B65G 27/04

(54) **PROCESS FOR MAKING LAUNDRY UNIT DOSE ARTICLES**

(30) Priority: 01.09.2014 EP 14183080
(71) Applicant: The Procter & Gamble Company, Cincinnati, OH 45202 (US)
(72) Inventor: DENS, Jochen, 1853 Strombeek-Bever (BE); FARCY, Eric Gaston Albert, BP1336 Amiens (FR); SARR, Moustapha, BP1336 Amiens (FR); BARIS, Sylvain, BP1336 Amiens (FR); WHITTALL, Robin Alec Michael, Birmingham, B32 3DB (GB)
(74) Representative: Pickford, James Lawrence

(57) **Abstract**

The present invention relates to a process for relocating unit dose articles (6) and a use to achieve said relocation.

## Description

### FIELD OF THE INVENTION

The present invention relates to processes for relocating unit dose articles and apparatus to achieve said relocation.

### BACKGROUND OF THE INVENTION

Fabric and home care articles have become popular with consumers. Such articles typically comprises a water-soluble film defining an internal compartment, wherein the compartment contains a liquid or solid fabric or home care treatment composition. Upon addition to water, the water-soluble film dissolves and releases the internal composition into the wash liquor. Such articles are convenient and avoid mess from dosing operations.

However, an issue with such articles is during manufacture/production. Often, unit dose articles need to be moved from a first location to a second location during the production process. However, during such relocation the unit dose articles may get stuck. This is due to them sticking to each other and or the surface over which they are moving. This sticking together may result in a blockage which requires interruption of the manufacture process to clear said blockage.

Currently, unit dose articles are dusted with an inert compound such as talc or zeolite to reduce incidents of them sticking together. However, a drawback with dusting is that there is a tendency for the dusting material to contaminate other areas of the production process and complicated and expensive means need to be employed to reduce incidents of contamination.

Thus, there is a need in the art for a process of moving a unit dose article from a first location to a second location without the need of dusting and also in which incidents of the unit dose articles causing blockages is minimized.

The Inventors surprisingly found that a process according to the present invention overcame this technical problem.

### SUMMARY OF THE INVENTION

The present invention is to a process for transporting unit dose articles from a first location to a second location comprising the step of passing the unit dose articles over a surface;
- wherein the surface has an upper face;
- wherein the upper face of the surface comprises at least one protrusion
- wherein any 10cm x 10cm area of the upper surface has a calculated surface area of between 10,000mm², and 12,000mm²;
- wherein, the articles at least in part contact the upper face of the surface as they pass over the surface; and
- wherein the surface vibrates at frequency of between 30 and 65Hz, and at an amplitude of between 0mm and 5mm; and
- wherein the unit dose articles comprise a fabric or home care treatment composition.

The present invention is also to the use of a surface as described above.

### BRIEF DESCRIPTION OF THE DRAWINGS

FIG. 1 discloses a surface according to the present disclosure.
FIG. 2 discloses an enlarged view of area A of FIG. 1, which includes a protrusion.
FIG. 3 discloses a unit dose article.

### DETAILED DESCRIPTION OF THE INVENTION

### Process

The present invention is to a process for transporting unit dose articles from a first location to a second location. The process may be continuous, semi-continuous or discontinuous.

The process comprises the step of passing the unit dose articles over a surface. By 'surface' we herein a component over which the unit dose article will pass when moving from a first location to a second location. The unit dose articles are at least partially in contact with said upper face of the surface. The surface is comprised between a first location and a second location.

The first location and second location could be within the same apparatus, or could be on two different apparatus.

The surface may be an integral component of a single apparatus over which the unit dose article moves between two operations within said same apparatus, in which case the first and second locations are within the same apparatus and are connected by the surface. There may be a physical gap between the surface of the first location and/or second location. Such a gap may be for example a few millimetres or a few centimetres. The gap could be between 5mm and 15mm.

Alternatively, wherein the surface is comprised between two different apparatus, the first apparatus could completely or at least in part manufacture the unit dose article, and the second apparatus could perform a second operation. In such an example, the surface acts as a bridge connecting the two apparatuses, wherein the first apparatus is the first location and the second apparatus is the second location. There may be a physical gap between the surface and the first location and/or second location.

Alternatively, the surface may be comprised within a first apparatus, and the first location is located on a second apparatus and the second location located on a third apparatus. There may be a physical gap between the surface and the first location and/or second location.

The upper face of the surface comprises at least one protrusion. The protrusion is described in more detail below. Any 10cm x 10cm area of the upper surface has a calculated surface area of between 10,000mm² and 12,000mm², or even between 10,000mm² and 11,500mm².

Furthermore, the surface vibrates at a frequency of between 30 and 65Hz. The surface is described in more detail below.

The unit dose articles comprise a fabric or home care treatment composition. The unit dose articles are described in more detail below.

The process may comprise a step of dusting the unit dose articles. If the process does comprise a dusting step, it is intended that the level of dusting required is less than that of known processes in the art. Suitable dusting material can be selected from talc, silicone, silica, carbonate or mixtures thereof.

Without wishing to be bound by theory, it is the combination of the features of the surface used in the process that allows a reduction in dusting to be achieved. Surprisingly, the Inventors also found that the process of the present invention allowed greater ranges in temperature and humidity to be achievable during the process of moving the unit dose article from a first location to a second location. Without wishing to be bound by theory, factors such as temperature and humidity may affect the ability of the unit dose article to move from a first location to a second location over a surface without resulting in blockages or of the article sticking together.

### The surface

The surface comprises an upper face. The upper face of the surface represents that part of the surface over which the articles pass during the transportation of the article from a first location to a second location. The surface will comprise a lower face and also side faces since the surface is a three dimensional object. The lower and side faces may be in contact with other parts of the apparatus; however, the upper face is the part of the surface that contacts the unit dose objects.

The surface may be part of a larger unit, for example it may comprise the bottom wall of a trough. In such an example, the trough may comprise side walls arranged opposite one another to form a general 'U' shape down which the unit dose articles will pass. Alternatively the surface may comprise one or more side walls of the trough. Alternatively, the surface may comprise both the bottom wall and the side walls of the trough. The surface may be flat or have a degree of curvature.

The upper side of the surface has a calculated surface area. In the context of the present invention, the surface area is a measure of the one dimensional area occupied by said upper surface. In other words the surface area of the parts of the solid body or structure over which the articles pass. The calculated surface area is a measure of the total area that the one dimensional surface occupies, including the at least one protrusion.

Those skilled in the art would recognise the appropriate mathematical means necessary to calculate the surface area.

The surface area can be calculated using appropriate geometrical equations such as A=X*Y or A=1/2 base*height or A=πr² or A=4πr² or A = πr(r √h²+r²). Alternatively, the surface area can be calculated using a commercially available proprietary Computer Aided Drafting application. Those skilled in the art will know how to calculate the surface area using common general knowledge.

Any 10cm x 10cm area of the upper surface has a calculated surface area of between 10,000mm2 and 12,000mm2, or even between 10,000mm2 and 11,500mm².

The articles at least in part contact the surface as they pass over it. Due to the dimensions of the article and those of the protrusion, at least part of the surface will not contact the article. Such a scenario may occur for example where the protrusion is of a size and shape meaning the article is only able to touch the top part of the protrusion as it is too big to fit into the space between the bottom of the protrusion and the top of the protrusion and hence be in contact with lower part of the protrusion.

Preferably, the ratio of any dimension of the upper face of the surface to any dimension of the unit dose article is no less than 1.5:1, preferably 2:1.

The surface can be made from any suitable material. Suitable materials include natural or synthetic materials or mixtures thereof. Suitable materials include metals or plastics or mixtures thereof. The surface may comprise a metal, preferably stainless steel.

The upper face of the surface comprises at least one protrusion. The upper face of the surface may comprise a plurality of protrusions. The protrusions may be present across the entire upper face of the surface or be present in part across the upper face. If more than two protrusions are present, then the protrusions may be spaced equidistant from one another or spaced at differing distances from one another. The protrusions may be arranged in any suitable geometric arrangement. The protrusions may be arranged in rows wherein each protrusion is spaced equidistant to the next protrusion in said row and wherein each row is spaced equidistant to any adjacent row. Alternatively, the protrusions may be spaced apart from one another in a triangular arrangement whereby any three protrusions are arranged from one another in an equilateral triangle. Alternatively, the protrusions may be arranged in rows and also in an equilateral triangle.

The protrusions serve to increase or decrease the area of the upper face of the surface that is in contact with the articles. This provides a lower surface area of the upper face that is contact with any part of the articles. Without wishing to be bound by theory, it is believed that this reduction in the area of contact together with the surface vibrations reduced the instances of the articles sticking to the surface and one another. Those skilled in the art will recognize suitable size and distribution of the protrusions on the upper face of the surface in order to achieve this.

Each protrusion may have a maximum height from the upper face of the surface of between 0.5mm and 3mm, or even between 0.75mm and 2.5mm or even between 1mm and 2mm. In the present context, the height is measure from the upper face where no protrusion is present to the highest point on the protrusion. Where the surface comprises more than one protrusions, the protrusions may be of different or the same height.

The protrusion may be arranged such that the geometric centre of any one protrusion is at a distance of between 1mm and 15mm, or even 2mm and 12mm from the geometric centre of a neighbouring protrusion.

The protrusion may have any suitable shape. The protrusion may have an hexagonal shape, circular shape, or mixture thereof.

The protrusion may have a rounded or flat top. It is preferred that the protrusion does not have a pointed top. Preferably, the top of the protrusion has a degree of curvature.

A preferred shape is hexagonal with a curved top. Alternatively, a preferred shape is circular with a curved top. Where there is more than one protrusion present, the protrusions may have the same or different shapes.

The surface may be embossed to produce the protrusions. Alternatively, the protrusions are made from a different material that is adhered to the upper face of the surface. The adhered material may be natural or synthetic or a mixture thereof. The adhered material may be metallic or plastic or a mixture thereof. Preferably, the adhered material is a plastic material, even a polyurethane derived plastic material. Alternatively, the upper face of the surface comprises an embossed region to produce protrusions and also comprises an adhered material comprising protrusions.

The surface may comprise a coating. The coating is preferably a substance that reduces friction. The surface may be coated with a fluoropolymer, for example commercially available 'Teflon' polymers. Those skilled in the art would know suitable polymers to us.

The surface vibrates at a frequency of between 30Hz and 65Hz. The surface may even vibrate at a frequency of between 35Hz and 60Hz or even between 40Hz and 55Hz.

The surface vibrates at an amplitude of between 0mm and 5mm, or even between 1mm and 4mm.

The vibration of the surface may be horizontal, vertical, or a mixture thereof, preferably a mixture thereof. Alternatively, the vibration of the surface may be achieved via reciprocating motion, preferably in a circular reciprocating motion. Preferably, the entire surface vibrates.

The vibrations may be achieved using any suitable means. Those skilled in the art will recognize suitable means to achieve the required level of vibration. Preferred means include a coil and a magnetic gap.

The surface may be horizontal or may be at an angle relative to the horizontal. If it is an angle then it is preferred that the articles pass over the surface in a direction from the highest to lowest point, such that they are aided over the surface by gravity. The surface may be at angle of between zero and 40°, or even between 2° and 35° or even between 5° and 30° relative to horizontal.

### Apparatus

The present invention is also to an apparatus for transporting unit dose articles from a first location to a second location compromising a surface that the unit dose articles pass over;
- wherein the surface has an upper face;
- wherein the upper face of the surface comprises at least one protrusion
- wherein any 10cm x 10cm area of the upper surface has a calculated surface area of between 10,000mm² and 12,000mm²;
- wherein, the articles at least in part contact the upper face of the surface as they pass over the surface; and
- wherein the surface vibrates at frequency of between 30 and 65Hz, and at an amplitude of between 0mm and 5mm; and
- wherein the unit dose articles comprise a fabric or home care treatment composition.

The surface is as described above. The apparatus is preferably used to perform the process of the present invention.

The apparatus may comprise more than one surface according to the present invention. The apparatus may comprise at least 2, or even at least 4, or even at least 6, or even at least 8, or even at least 16, or even at least 32 surfaces according to the present invention.

### Unit dose articles

The unit dose articles of the present invention comprise a fabric or home care treatment composition. The composition may be in the form of a solid, a liquid, a dispersion, a gel, a paste or a mixture thereof. The composition is described in more detail below.

The unit dose article herein is typically a closed structure, made of the water-soluble film enclosing an internal volume which comprises the composition. The article can be of any form and shape which is suitable to hold and protect the composition, e.g. without allowing the release of the composition from the article prior to contact of the article to water. The exact execution will depend on factors like the type and amount of the composition in the article, the number of compartments in the article, the characteristics required for the water-soluble film to hold, protect, and release the composition. The unit dose article may have a substantially, square, rectangular, oval, elliptoid, superelliptical, or circular shape. The shape may or may not include any excess material present as a flange or skirt at the point where two or more films are sealed together. By "substantially", we herein mean that the shape has an overall impression of being for example square. It may have rounded corners and/or non-straight sides, but overall it gives the impression of being square for example.

The unit dose article has a height, a width and a length. The maximum of any of these dimensions is meant to mean the greatest distance between two points on opposite sides of the unit dose article. In other words, the unit dose article may not have straight sides and so may have variable lengths, widths and heights depending on where the measurement is taken. Therefore, the maximum should be measured at any two points that are the furthest apart from each other. The unit dose article is a three dimensional object, wherein any dimension of the unit dose article may have a maximum length of between 3cm and 9cm, or even 4cm and 8cm.

The maximum length may be between 2cm and 5 cm, or even between 2cm and 4cm, or even between 2cm and 3cm. The maximum length maybe greater than 2cm and less than 6cm

The maximum width may be between 2cm and 5cm. The maximum width maybe greater than 3cm and less than 6cm.

The maximum height may be between 2cm and 5cm. The maximum height maybe greater than 2cm and less than 4cm.

Preferably, the length: height ratio is from 3:1 to 1:1; or the width: height ratio is from 3:1 to 1:1, or even 2.5:1 to 1:1; or the ratio of length to height is from 3:1 to 1:1 and the ratio of width to height is from 3:1 to 1:1, or even 2.5:1 to 1:1, or a combination thereof.

The unit dose article may have a volume of between 10 and 40 ml, or even between 10 and 35 ml, or even between 10 and 25 ml. The volume should be understood to mean the overall volume of the unit dose article and not limited to the volume of the fabric or home care treatment composition.

The unit dose article comprises at least one compartment. The unit dose article may optionally comprise additional compartments; said additional compartments may comprise an additional composition. Said additional composition may be liquid, solid, or mixtures thereof. Alternatively, any additional solid component may be suspended in a liquid-filled compartment. Each compartment may have the same or different compositions. A multi-compartment unit dose form may be desirable for such reasons as: separating chemically incompatible ingredients; or where it is desirable for a portion of the ingredients to be released into the wash earlier or later. The unit dose article may comprise at least one, or even at least two, or even at least three, or even at least four, or even at least five compartments. The unit dose article may comprise two compartments, wherein a first compartment comprises from 5% to 20% by weight of the compartment of a chelant, preferably wherein the chelant is in a solid form.

The multiple compartments may be arranged in any suitable orientation. For example the unit dose article may comprise a bottom compartment, and at least a first top compartment, wherein the top compartment is superposed onto the bottom compartment. The unit dose article may comprise a bottom compartment and at least a first and a second top compartment, wherein the top compartments are arranged side-by-side and are superposed on the bottom compartment; preferably, wherein the article comprises a bottom compartment and at least a first, a second and a third top compartment, wherein the top compartments are arranged side-by-side and are superposed on the bottom compartment.

Alternatively, the compartments may all be positioned in a side-by-side arrangement. In such an arrangement the compartments may be connected to one another and share a dividing wall, or may be substantially separated and simply held together by a connector or bridge. Alternatively, the compartments may be arranged in a 'tyre and rim' orientation, i.e. a first compartment is positioned next to a second compartment, but the first compartment at least partially surrounds the second compartment, but does not completely enclose the second compartment. Alternatively, the compartments may be arranged such that the first compartment is completely enclosed within the second compartment.

### Water-soluble film

The film of the unit dose article is soluble or dispersible in water, and preferably has a water-solubility of at least 50%, preferably at least 75% or even at least 95%, as measured by the method set out here after using a glass-filter with a maximum pore size of 20 microns:
50 grams ±0.1 gram of film material is added in a pre-weighed 400 ml beaker and 245ml ± 1ml of distilled water is added. This is stirred vigorously on a magnetic stirrer set at 600 rpm, for 30 minutes. Then, the mixture is filtered through a folded qualitative sintered-glass filter with a pore size as defined above (max. 20 micron). The water is dried off from the collected filtrate by any conventional method, and the weight of the remaining material is determined (which is the dissolved or dispersed fraction). Then, the percentage solubility or dispersability can be calculated.

Preferred film materials are preferably polymeric materials. The film material can, for example, be obtained by casting, blow-moulding, extrusion or blown extrusion of the polymeric material, as known in the art.

Preferred polymers, copolymers or derivatives thereof suitable for use as pouch material are selected from polyvinyl alcohols, polyvinyl pyrrolidone, polyalkylene oxides, acrylamide, acrylic acid, cellulose, cellulose ethers, cellulose esters, cellulose amides, polyvinyl acetates, polycarboxylic acids and salts, polyaminoacids or peptides, polyamides, polyacrylamide, copolymers of maleic/acrylic acids, polysaccharides including starch and gelatine, natural gums such as xanthum and carragum. More preferred polymers are selected from polyacrylates and water-soluble acrylate copolymers, methylcellulose, carboxymethylcellulose sodium, dextrin, ethylcellulose, hydroxyethyl cellulose, hydroxypropyl methylcellulose, maltodextrin, polymethacrylates, and most preferably selected from polyvinyl alcohols, polyvinyl alcohol copolymers and hydroxypropyl methyl cellulose (HPMC), and combinations thereof. Preferably, the level of polymer in the pouch material, for example a PVA polymer, is at least 60%. The polymer can have any weight average molecular weight, preferably from about 1000 to 1,000,000, more preferably from about 10,000 to 300,000 yet more preferably from about 20,000 to 150,000.

Mixtures of polymers can also be used as the film material. This can be beneficial to control the mechanical and/or dissolution properties of the compartments or article, depending on the application thereof and the required needs. Suitable mixtures include for example mixtures wherein one polymer has a higher water-solubility than another polymer, and/or one polymer has a higher mechanical strength than another polymer. Also suitable are mixtures of polymers having different weight average molecular weights, for example a mixture of PVA or a copolymer thereof of a weight average molecular weight of about 10,000- 40,000, preferably around 20,000, and of PVA or copolymer thereof, with a weight average molecular weight of about 100,000 to 300,000, preferably around 150,000. Also suitable herein are polymer blend compositions, for example comprising hydrolytically degradable and water-soluble polymer blends such as polylactide and polyvinyl alcohol, obtained by mixing polylactide and polyvinyl alcohol, typically comprising about 1-35% by weight polylactide and about 65% to 99% by weight polyvinyl alcohol. Preferred for use herein are polymers which are from about 60% to about 98% hydrolysed, preferably about 80% to about 90% hydrolysed, to improve the dissolution characteristics of the material.
Preferred films exhibit good dissolution in cold water, meaning unheated water straight from the tap. Preferably such films exhibit good dissolution at temperatures below 25°C, more preferably below 21°C, more preferably below 15°C. By good dissolution it is meant that the film exhibits water-solubility of at least 50%, preferably at least 75% or even at least 95%, as measured by the method set out here after using a glass-filter with a maximum pore size of 20 microns, described above.

Preferred films are those supplied by Monosol under the trade references M8630, M8900, M8779, M8310, films described in US 6 166 117 and US 6 787 512 and PVA films of corresponding solubility and deformability characteristics. Further preferred films are those describes in US2006/0213801, WO 2010/119022, US2011/0188784 and US6787512.

Preferred water soluble films are those resins comprising one or more PVA polymers, preferably said water soluble film resin comprises a blend of PVA polymers. For example, the PVA resin can include at least two PVA polymers, wherein as used herein the first PVA polymer has a viscosity less than the second PVA polymer. A first PVA polymer can have a viscosity of at least 8 cP (cP mean centipoise), 10 cP, 12 cP, or 13 cP and at most 40 cP, 20 cP, 15 cP, or 13 cP, for example in a range of about 8 cP to about 40 cP, or 10 cP to about 20 cP, or about 10 cP to about 15 cP, or about 12 cP to about 14 cP, or 13 cP. Furthermore, a second PVA polymer can have a viscosity of at least about 10 cP, 20 cP, or 22 cP and at most about 40 cP, 30 cP, 25 cP, or 24 cP, for example in a range of about 10 cP to about 40 cP, or 20 to about 30 cP, or about 20 to about 25 cP, or about 22 to about 24, or about 23 cP. The viscosity of a PVA polymer is determined by measuring a freshly made solution using a Brookfield LV type viscometer with UL adapter as described in British Standard EN ISO 15023-2:2006 Annex E Brookfield Test method. It is international practice to state the viscosity of 4% aqueous polyvinyl alcohol solutions at 20 .deg.C. All viscosities specified herein in cP should be understood to refer to the viscosity of 4% aqueous polyvinyl alcohol solution at 20 .deg.C, unless specified otherwise. Similarly, when a resin is described as having (or not having) a particular viscosity, unless specified otherwise, it is intended that the specified viscosity is the average viscosity for the resin, which inherently has a corresponding molecular weight distribution.

The individual PVA polymers can have any suitable degree of hydrolysis, as long as the degree of hydrolysis of the PVA resin is within the ranges described herein. Optionally, the PVA resin can, in addition or in the alternative, include a first PVA polymer that has a Mw in a range of about 50,000 to about 300,000 Daltons, or about 60,000 to about 150,000 Daltons; and a second PVA polymer that has a Mw in a range of about 60,000 to about 300,000 Daltons, or about 80,000 to about 250,000 Daltons.

The PVA resin can still further include one or more additional PVA polymers that have a viscosity in a range of about 10 to about 40 cP and a degree of hydrolysis in a range of about 84% to about 92%.
When the PVA resin includes a first PVA polymer having an average viscosity less than about 11 cP and a polydispersity index in a range of about 1.8 to about 2.3, then in one type of embodiment the PVA resin contains less than about 30 wt.% of the first PVA polymer. Similarly, when the PVA resin includes a first PVA polymer having an average viscosity less than about 11 cP and a polydispersity index in a range of about 1.8 to about 2.3, then in another, non-exclusive type of embodiment the PVA resin contains less than about 30 wt.% of a PVA polymer having a Mw less than about 70,000 Daltons.
Of the total PVA resin content in the film described herein, the PVA resin can comprise about 30 to about 85 wt.% of the first PVA polymer, or about 45 to about 55 wt.% of the first PVA polymer. For example, the PVA resin can contain about 50 wt.% of each PVA polymer, wherein the viscosity of the first PVA polymer is about 13 cP and the viscosity of the second PVA polymer is about 23 cP.
One type of embodiment is characterized by the PVA resin including about 40 to about 85 wt.% of a first PVA polymer that has a viscosity in a range of about 10 to about 15 cP and a degree of hydrolysis in a range of about 84% to about 92%. Another type of embodiment is characterized by the PVA resin including about 45 to about 55 wt.% of the first PVA polymer that has a viscosity in a range of about 10 to about 15 cP and a degree of hydrolysis in a range of about 84% to about 92%. The PVA resin can include about 15 to about 60 wt.% of the second PVA polymer that has a viscosity in a range of about 20 to about 25 cP and a degree of hydrolysis in a range of about 84% to about 92%. One contemplated class of embodiments is characterized by the PVA resin including about 45 to about 55 wt.% of the second PVA polymer. When the PVA resin includes a plurality of PVA polymers the PDI value of the PVA resin is greater than the PDI value of any individual, included PVA polymer. Optionally, the PDI value of the PVA resin is greater than 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.5, or 5.0.

The film material herein can also comprise one or more additive ingredients. For example, it can be beneficial to add plasticisers, for example glycerol, ethylene glycol, diethyleneglycol, propylene glycol, sorbitol and mixtures thereof. Other additives may include water and functional detergent additives, including water, to be delivered to the wash water, for example organic polymeric dispersants, etc.

The film may be opaque, transparent or translucent. The film may comprise a printed area. The printed area may cover between 10 and 80% of the surface of the film; or between 10 and 80% of the surface of the film that is in contact with the internal space of the compartment; or between 10 and 80% of the surface of the film and between 10 and 80% of the surface of the compartment.

The area of print may cover an uninterrupted portion of the film or it may cover parts thereof, i.e. comprise smaller areas of print, the sum of which represents between 10 and 80% of the surface of the film or the surface of the film in contact with the internal space of the compartment or both.

The area of print may comprise inks, pigments, dyes, blueing agents or mixtures thereof. The area of print may be opaque, translucent or transparent.

The area of print may comprise a single colour or maybe comprise multiple colours, even three colours. The area of print may comprise white, black, blue, red colours, or a mixture thereof. The print may be present as a layer on the surface of the film or may at least partially penetrate into the film. The film will comprise a first side and a second side. The area of print may be present on either side of the film, or be present on both sides of the film. Alternatively, the area of print may be at least partially comprised within the film itself.

The area of print may comprise an ink, wherein the ink comprises a pigment. The ink for printing onto the film has preferably a desired dispersion grade in water. The ink may be of any color including white, red, and black. The ink may be a water-based ink comprising from 10% to 80% or from 20% to 60% or from 25% to 45% per weight of water. The ink may comprise from 20% to 90% or from 40% to 80% or from 50% to 75% per weight of solid.

The ink may have a viscosity measured at 20°C with a shear rate of 1000s⁻¹ between 1 and 600 cPs or between 50 and 350 cPs or between 100 and 300 cPs or between 150 and 250 cPs. The measurement may be obtained with a cone- plate geometry on a TA instruments AR-550 Rheometer.

The area of print may be achieved using standard techniques, such as flexographic printing or inkjet printing. Preferably, the area of print is achieved via flexographic printing, in which a film is printed, then moulded into the shape of an open compartment. This compartment is then filled with a detergent composition and a second film placed over the compartment and sealed to the first film. The area of print may be on either or both sides of the film.

Alternatively, an ink or pigment may be added during the manufacture of the film such that all or at least part of the film is coloured.
The film may comprise an aversive agent, for example a bittering agent. Suitable bittering agents include, but are not limited to, naringin, sucrose octaacetate, quinine hydrochloride, denatonium benzoate, or mixtures thereof. Any suitable level of aversive agent may be used in the film. Suitable levels include, but are not limited to, 1 to 5000ppm, or even 100 to 2500ppm, or even 250 to 2000rpm.

### Composition

The composition may be any suitable composition. The composition may be in the form of a solid, a liquid, a dispersion, a gel, a paste or a mixture thereof. Non-limiting examples of compositions include cleaning compositions, fabric care compositions and hard surface cleaners. More particularly, the compositions may be a laundry, fabric care or dish washing composition including, pre-treatment or soaking compositions and other rinse additive compositions. The composition may be a fabric detergent composition or an automatic dish washing composition. The fabric detergent composition may be used during the main wash process or could be used as pre-treatment or soaking compositions.

Fabric care compositions include fabric detergents, fabric softeners, 2-in-1 detergent and softening, pre-treatment compositions and the like. Fabric care compositions comprise typical fabric care compositions, including surfactants, builders, chelating agents, dye transfer inhibiting agents, dispersants, enzymes, and enzyme stabilizers, catalytic materials, bleach activators, polymeric dispersing agents, clay soil removal/anti-redeposition agents, brighteners, suds suppressors, dyes, additional perfume and perfume delivery systems, structure elasticizing agents, fabric softeners, carriers, hydrotropes, processing aids and/or pigments and mixtures thereof. The composition may be a laundry detergent composition comprising an ingredient selected from the group comprising a shading dye, surfactant, polymers, perfumes, encapsulated perfume materials, structurant and mixtures thereof.

The composition may be an automatic dish washing composition comprising an ingredient selected from surfactant, builder, sulfonated / carboxylated polymer, silicone suds suppressor, silicate, metal and/or glass care agent, enzyme, bleach, bleach activator, bleach catalyst, source of alkalinity, perfume, dye, solvent, filler and mixtures thereof.

Surfactants can be selected from anionic, cationic, zwitterionic, non-ionic, amphoteric or mixtures thereof. Preferably, the fabric care composition comprises anionic, non-ionic or mixtures thereof.

The anionic surfactant may be selected from linear alkyl benzene sulfonate, alkyl ethoxylate sulphate and combinations thereof.

Suitable anionic surfactants useful herein can comprise any of the conventional anionic surfactant types typically used in liquid detergent products. These include the alkyl benzene sulfonic acids and their salts as well as alkoxylated or non-alkoxylated alkyl sulfate materials.

Suitable nonionic surfactants for use herein include the alcohol alkoxylate nonionic surfactants. Alcohol alkoxylates are materials which correspond to the general formula: R¹(CₙH₂ₘO)ₙOH wherein R¹ is a C₈-C₁₆ alkyl group, m is from 2 to 4, and n ranges from about 2 to 12. In one aspect, R¹ is an alkyl group, which may be primary or secondary, that comprises from about 9 to 15 carbon atoms, or from about 10 to 14 carbon atoms. In one aspect, the alkoxylated fatty alcohols will also be ethoxylated materials that contain from about 2 to 12 ethylene oxide moieties per molecule, or from about 3 to 10 ethylene oxide moieties per molecule.

The shading dyes employed in the present laundry care compositions may comprise polymeric or non-polymeric dyes, pigments, or mixtures thereof. Preferably the shading dye comprises a polymeric dye, comprising a chromophore constituent and a polymeric constituent. The chromophore constituent is characterized in that it absorbs light in the wavelength range of blue, red, violet, purple, or combinations thereof upon exposure to light. In one aspect, the chromophore constituent exhibits an absorbance spectrum maximum from about 520 nanometers to about 640 nanometers in water and/or methanol, and in another aspect, from about 560 nanometers to about 610 nanometers in water and/or methanol.

Although any suitable chromophore may be used, the dye chromophore is preferably selected from benzodifuranes, methine, triphenylmethanes, napthalimides, pyrazole, napthoquinone, anthraquinone, azo, oxazine, azine, xanthene, triphenodioxazine and phthalocyanine dye chromophores. Mono and di-azo dye chromophores are preferred.

The shading dye may comprise a dye polymer comprising a chromophore covalently bound to one or more of at least three consecutive repeat units. It should be understood that the repeat units themselves do not need to comprise a chromophore. The dye polymer may comprise at least 5, or at least 10, or even at least 20 consecutive repeat units.

The repeat unit can be derived from an organic ester such as phenyl dicarboxylate in combination with an oxyalkyleneoxy and a polyoxyalkyleneoxy. Repeat units can be derived from alkenes, epoxides, aziridine, carbohydrate including the units that comprise modified celluloses such as hydroxyalkylcellulose; hydroxypropyl cellulose; hydroxypropyl methylcellulose; hydroxybutyl cellulose; and, hydroxybutyl methylcellulose or mixtures thereof. The repeat units may be derived from alkenes, or epoxides or mixtures thereof. The repeat units may be C2-C4 alkyleneoxy groups, sometimes called alkoxy groups, preferably derived from C2-C4 alkylene oxide. The repeat units may be C2-C4 alkoxy groups, preferably ethoxy groups.

For the purposes of the present invention, the at least three consecutive repeat units form a polymeric constituent. The polymeric constituent may be covalently bound to the chromophore group, directly or indirectly via a linking group. Examples of suitable polymeric constituents include polyoxyalkylene chains having multiple repeating units. In one aspect, the polymeric constituents include polyoxyalkylene chains having from 2 to about 30 repeating units, from 2 to about 20 repeating units, from 2 to about 10 repeating units or even from about 3 or 4 to about 6 repeating units. Non-limiting examples of polyoxyalkylene chains include ethylene oxide, propylene oxide, glycidol oxide, butylene oxide and mixtures thereof.

The dye may be introduced into the detergent composition in the form of the unpurified mixture that is the direct result of an organic synthesis route. In addition to the dye polymer therefore, there may also be present minor amounts of un-reacted starting materials, products of side reactions and mixtures of the dye polymers comprising different chain lengths of the repeating units, as would be expected to result from any polymerisation step.

The compositions can comprise one or more detergent enzymes which provide cleaning performance and/or fabric care benefits. Examples of suitable enzymes include, but are not limited to, hemicellulases, peroxidases, proteases, cellulases, xylanases, lipases, phospholipases, esterases, cutinases, pectinases, keratanases, reductases, oxidases, phenoloxidases, lipoxygenases, ligninases, pullulanases, tannases, pentosanases, malanases, ß-glucanases, arabinosidases, hyaluronidase, chondroitinase, laccase, and amylases, or mixtures thereof. A typical combination is a cocktail of conventional applicable enzymes like protease, lipase, cutinase and/or cellulase in conjunction with amylase.

The fabric care compositions of the present invention may comprise one or more bleaching agents. Suitable bleaching agents other than bleaching catalysts include photobleaches, bleach activators, hydrogen peroxide, sources of hydrogen peroxide, pre-formed peracids and mixtures thereof. In general, when a bleaching agent is used, the compositions of the present invention may comprise from about 0.1% to about 50% or even from about 0.1% to about 25% bleaching agent by weight of the subject cleaning composition.

The composition may comprise a brightener. Suitable brighteners are stilbenes, such as brightener 15. Other suitable brighteners are hydrophobic brighteners, and brightener 49. The brightener may be in micronized particulate form, having a weight average particle size in the range of from 3 to 30 micrometers, or from 3 micrometers to 20 micrometers, or from 3 to 10 micrometers. The brightener can be alpha or beta crystalline form.

The compositions herein may also optionally contain one or more copper, iron and/or manganese chelating agents. If utilized, chelating agents will generally comprise from about 0.1% by weight of the compositions herein to about 15%, or even from about 3.0% to about 15% by weight of the compositions herein.

The composition may comprise a calcium carbonate crystal growth inhibitor, such as one selected from the group consisting of: 1-hydroxyethanediphosphonic acid (HEDP) and salts thereof; N,N-dicarboxymethyl-2-aminopentane-1,5-dioic acid and salts thereof; 2-phosphonobutane-1,2,4-tricarboxylic acid and salts thereof; and any combination thereof.

The compositions of the present invention may also include one or more dye transfer inhibiting agents. Suitable polymeric dye transfer inhibiting agents include, but are not limited to, polyvinylpyrrolidone polymers, polyamine N-oxide polymers, copolymers of N-vinylpyrrolidone and N-vinylimidazole, polyvinyloxazolidones and polyvinylimidazoles or mixtures thereof. When present in the compositions herein, the dye transfer inhibiting agents are present at levels from about 0.0001%, from about 0.01%, from about 0.05% by weight of the cleaning compositions to about 10%, about 2%, or even about 1% by weight of the cleaning compositions.

The fabric care composition may comprise one or more polymers. Suitable polymers include carboxylate polymers, polyethylene glycol polymers, polyester soil release polymers such as terephthalate polymers, amine polymers, cellulosic polymers, dye transfer inhibition polymers, dye lock polymers such as a condensation oligomer produced by condensation of imidazole and epichlorhydrin, optionally in ratio of 1:4:1, hexamethylenediamine derivative polymers, and any combination thereof.

Other suitable cellulosic polymers may have a degree of substitution (DS) of from 0.01 to 0.99 and a degree of blockiness (DB) such that either DS+DB is of at least 1.00 or DB+2DS-DS² is at least 1.20. The substituted cellulosic polymer can have a degree of substitution (DS) of at least 0.55. The substituted cellulosic polymer can have a degree of blockiness (DB) of at least 0.35. The substituted cellulosic polymer can have a DS + DB, of from 1.05 to 2.00. A suitable substituted cellulosic polymer is carboxymethylcellulose.

Another suitable cellulosic polymer is cationically modified hydroxyethyl cellulose.

Suitable perfumes include perfume microcapsules, polymer assisted perfume delivery systems including Schiff base perfume/polymer complexes, starch-encapsulated perfume accords, perfume-loaded zeolites, blooming perfume accords, and any combination thereof. A suitable perfume microcapsule is melamine formaldehyde based, typically comprising perfume that is encapsulated by a shell comprising melamine formaldehyde. It may be highly suitable for such perfume microcapsules to comprise cationic and/or cationic precursor material in the shell, such as polyvinyl formamide (PVF) and/or cationically modified hydroxyethyl cellulose (catHEC).

Suitable suds suppressors include silicone and/or fatty acid such as stearic acid.

### The use of a surface

The present invention is also to the use of a surface;
- wherein the surface has an upper face;
- wherein the upper face of the surface comprises at least one protrusion
- wherein any 10cm x 10cm area of the upper surface has a calculated surface area of between 10.000mm² and 12,000mm²;
- wherein, the articles at least in part contact the upper face of the surface as they pass over the surface; and
- wherein the surface vibrates at frequency of between 30 and 65Hz, and at an amplitude of between 0mm and 5mm;
for reducing the amount of dusting needed on a unit dose article comprising a fabric or home care treatment composition in order to move the unit dose article from a first location to a second location.

The surface is as described above according to the present invention.

### EXAMPLES

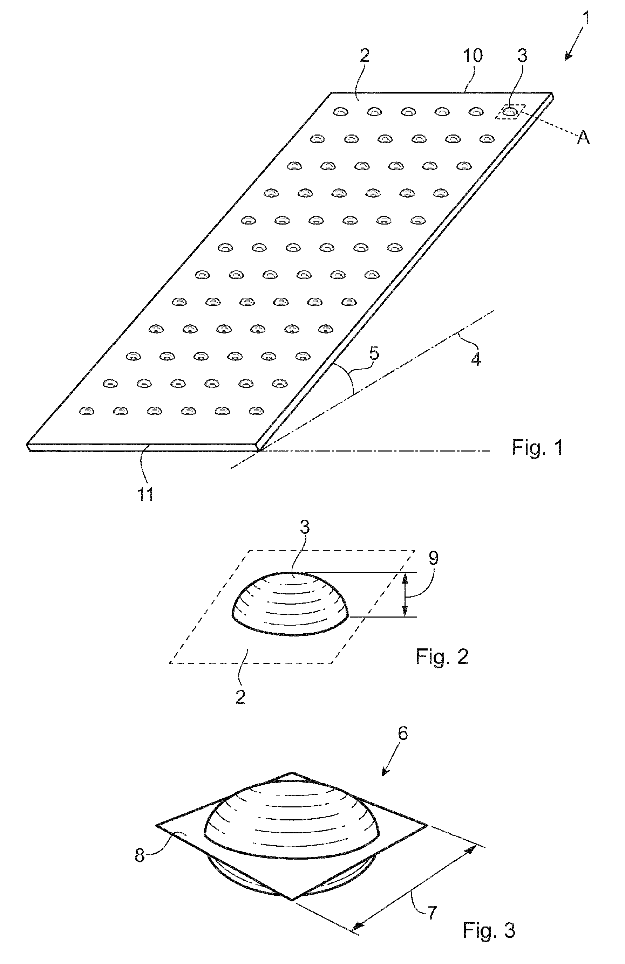

Figure 1 discloses a surface (1) wherein the surface (1) has an upper face (2), a first end (9), and a second end (10). A first end (10) may be proximal to a first location, and a second end (11) may be proximal to a second location. The upper face (2) of the surface (1) comprises at least one protrusion (3). The surface (1) is at angle of between about zero and about 40° (5) relative to the horizontal (4).

Figure 2 discloses an enlarged view of area A in Figure 1. The protrusion (3) has a maximum height (9) from the upper face (2) of between about 0.5mm and about 3mm. The protrusion (3) has a circular shape.

Figure 3 discloses a unit dose article (6) having a three dimensional shape wherein any dimension (7) of the unit dose article (6) has a maximum length of between about 3cm and about 9cm (7). The unit dose article (6) comprises a flange (8).

### Example 1

An exemplary process according to the present invention comprises the step of transporting unit dose articles from a first location to a second location comprising the step of passing the unit dose article over a surface.

The surface comprises stainless steel and has an upper face. Any 10cm x 10cm area of the upper surface has a calculated surface area of 11,264mm². The upper face of the surface comprises multiple protrusions wherein a 10cm x 10cm area comprises 440 protrusions and wherein each protrusion has a height of 0.8mm to 1mm. Each protrusion has a circular shape and is embossed into the surface. The distance from the geometric centre of any one protrusion to the geometric centre of a neighbouring protrusion is 5mm

The surface vibrates at frequency of between 48 and 52Hz, and a maximum amplitude of 3mm. The surface is at an angle of 20°. Vibration is achieved via coil and magnetic gap.

In a separate embodiment, the surface of example 1 vibrates at a frequency of between 30 and 35Hz and a maximum amplitude of 3mm. The surface is at an angle of 6°.

The unit dose comprises a fabric care treatment composition. The unit dose article has a size of 39mm ± 2mm x 35mm ± 2mm x 34mm ± 2mm (excluding the skirt/flange) and a volume of between 24ml and 34ml. Another unit dose pouch of example 1 has a size of 43mm ± 4mm x 45mm ± 5mm x 30mm ± 3mm (excluding the skirt/flange) and a volume of between 37ml and 43ml.

### Example 2

Example 2 is a process according to example 1 wherein the surface further comprises a coating. The coating is fluropolymer, preferably a Teflon fluropolymer.

### Example 3

An exemplary process 3 according to the present invention comprises the step of transporting unit dose articles from a first location to a second location comprising the step of passing the unit dose article over a surface.

The surface comprises stainless steel and has an upper face. Any 10cm x 10cm area of the upper surface has a calculated surface area of 10,305mm². The upper face of the surface comprises multiple protrusions wherein a 10cm x 10cm area comprises 168 protrusions and wherein each protrusion has a height of 0.7mm to 0.8mm. Each protrusion has a hexagonal shape and is embossed into the surface. The distance from the geometric centre of any one protrusion to the geometric centre of a neighbouring protrusion is 8mm

The surface vibrates at frequency of between 48 and 52Hz, and a maximum amplitude of 3mm. The surface is at an angle of 20°. Vibration is achieved via coil and magnetic gap. In a separate embodiment, the surface of example 1 vibrates at a frequency of between 30 and 35Hz and a maximum amplitude of 3mm. The surface is at an angle of 6°.

The unit dose article comprises a fabric care treatment composition. The unit dose comprises a fabric care treatment composition. The unit dose article has a size of 39mm ± 2mm x 35mm ± 2mm x 34mm ± 2mm (excluding the skirt/flange) and a volume of between 24ml and 34ml. Another unit dose pouch of example 1 has a size of 43mm ± 4mm x 45mm ± 5mm x 30mm ± 3mm (excluding the skirt/flange) and a volume of between 37ml and 43ml.

### Example 4

Example 4 is a process according to example 3 wherein the surface further comprises a coating. The coating is fluropolymer, preferably a Teflon fluropolymer.

### Example 5

Any of examples 1-4 wherein the unit dose article comprises an automatic dishwashing composition. The unit dose article has a size of 36mm ± 2mm x 32mm ± 2mm x 22mm ± 2mm and a volume of 23ml ± 2mm.

### Example 6

A further example is to a process comprising the step of transporting unit dose articles from a first location to a second location comprising the step of passing the unit dose article over a surface.

The surface comprises stainless steel and has an upper face. Any 10cm x 10cm area of the upper surface has a calculated surface area of 11,264mm². The upper face of the surface comprises multiple protrusions wherein a 10cm x 10cm area comprises 440 protrusions and wherein each protrusion has a height of 0.8mm to 1mm. Each protrusion has a circular shape and is embossed into the surface. The distance from the geometric centre of any one protrusion to the geometric centre of a neighbouring protrusion is 5mm

The surface does not vibrate and is vertically orientated.

The unit dose article comprises a fabric care treatment composition. The unit dose comprises a fabric care treatment composition. The unit dose article has a size of 39mm ± 2mm x 35mm ± 2mm x 34mm ± 2mm (excluding the skirt/flange) and a volume of between 24ml and 34ml. Another unit dose pouch of example 1 has a size of 43mm ± 4mm x 45mm ± 5mm x 30mm ± 3mm (excluding the skirt/flange) and a volume of between 37ml and 43ml.

### Example 7

Example 7 is a process according to example 6 wherein the surface further comprises a coating. The coating is fluropolymer, preferably a Teflon fluropolymer.

### Example 8

Any of examples 6-7wherein the unit dose article comprises an automatic dishwashing composition. The unit dose article has a size of 36mm ± 2mm x 32mm ± 2mm x 22mm ± 2mm and a volume of 23ml ± 2mm.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A process for transporting unit dose articles from a first location to a second location comprising the step of passing the unit dose articles over a surface;
- wherein the surface has an upper face;
- wherein the upper face of the surface comprises at least one protrusion
- wherein any 10cm x 10cm area of the upper surface has a calculated surface area of between 10,000mm² and 12,000mm²;
- wherein, the articles at least in part contact the upper face of the surface as they pass over the surface; and
- wherein the surface vibrates at frequency of between 30 and 65Hz, and at an amplitude of between 0mm and 5mm; and
- wherein the unit dose articles comprise a fabric or home care treatment composition.

2. The process according to Claim 1, wherein each protrusion has a maximum height from the upper face of the surface of between 0.5mm and 3mm, or even between 0.75mm and 2.5mm or even between 1mm and 2mm.

3. The process according to any preceding claims, wherein any 10cm x 10cm area of the upper surface has a calculated surface area is between 10,000mm2 and 11,500mm2.

4. The process according to any preceding claims, wherein the protrusion has a hexagonal shape, circular shape, or mixture thereof.

5. The process according to any preceding claims, wherein the surface vibrates at a frequency of between 35 and 60Hz or even between 40 and 55Hz.

6. The process according to any preceding claims, wherein the surface vibrates with an amplitude of between 1 and 4mm.

7. The process according to any preceding claims, wherein the surface is at angle of between zero and 40°, or even between 2° and 35° or even between 5° and 30° relative to horizontal.

8. The process according to any preceding claims, wherein the surface is metallic, preferably stainless steel.

9. The process according to claim 8, wherein the surface is embossed to produce the protrusions or wherein the surface is a flat surface in which the protrusions are formed of a different material.

10. The process according to any preceding claims, wherein the surface is coated with a fluoropolymer.

11. The process according to Claim 10, wherein the protrusions are formed from the coating material.

12. The process according to any preceding claims, wherein the unit dose article is a three dimensional object, wherein any dimension of the unit dose article has a maximum length of between 3cm and 9cm, or even 4cm and 8cm.

13. The process according to any preceding claims, wherein the unit dose article has a volume of between 10 and 40 ml, or even between 10 and 35 ml, or even between 10 and 25 ml.

14. The process according to any preceding claims, wherein the unit dose article comprises a water-soluble film, preferably where the film comprises PVOH.

15. The use of a surface;
- wherein the surface has an upper face;
- wherein the upper face of the surface comprises at least one protrusion
- wherein any 10cm x 10cm area of the upper surface has a calculated surface area of between 10,000mm² and 12,000mm²;
- wherein, the articles at least in part contact the upper face of the surface as they pass over the surface; and
- wherein the surface vibrates at frequency of between 30 and 65Hz, and at an amplitude of between 0mm and 5mm;
for reducing the amount of dusting needed on a unit dose article comprising a fabric or home care treatment composition in order to move the unit dose article from a first location to a second location.
